Europäisches Patentamt

European Patent Office

Office européen des brevets

(11) Publication number: **0 239 401**
**A1**

## (12) EUROPEAN PATENT APPLICATION

(21) Application number: **87302627.2**

(22) Date of filing: **26.03.87**

(51) Int. Cl.⁴: **F 16 D 27/10**
**F 16 D 27/14**

(30) Priority: **28.03.86 JP 46343/86**

(43) Date of publication of application:
**30.09.87 Bulletin 87/40**

(84) Designated Contracting States: **DE FR GB IT SE**

(71) Applicant: **SANDEN CORPORATION**
**20 Kotobuki-cho**
**Isesaki-shi Gunma-ken (JP)**

(72) Inventor: **Matsushita, Takashi**
**294-2 Yoge-machi**
**Isesaki-shi Gunma (JP)**

(74) Representative: **Jackson, Peter Arthur et al**
**GILL JENNINGS & EVERY 53-64 Chancery Lane**
**London WC2A 1HN (GB)**

(54) **Electromagnetic clutch.**

(57) An electromagnetic clutch includes a driving pulley (I4) and an electromagnetic mechanism (I9). A hub (22) is secured on a driven shaft (I3) and has a radially extending flange (22I). An armature plate (23) is concentrically disposed on the hub (22) and faces the axial end surface (I43) of the pulley with an axial air gap. A holder plate (24) is fixed on an outer axial end surface of the armature plate and is formed with a triangular axially extending flange (242). The radial flange of the hub is also formed with a second axially extending flange (222). The first and second axially extending flanges are formed of a similar configuration and face one another with a radial gap. An elastic member (27) is disposed on the radial gap. Therefore, the hub and the armature plate are connected by the elastic member, and impact force, when the clutch is engaged, is eased by the compressive deformation of the elastic member.

FIG 3

EP 0 239 401 A1

## Description

<center>ELECTROMAGNETIC CLUTCH</center>

This invention relates to an electromagnetic clutch, and more particularly to an improved connecting structure between an armature plate and a driven member, such as a hub for transmitting the rotational torque from a driving member to driven apparatus.

A conventional electromagnetic clutch with an elastic member for easing impact force transmitted to a driven shaft of a compressor is disclosed in US-A-3,774,739. The electromagnetic clutch disclosed in US-A-3,774,739 comprises, as shown in Figure I, a pulley I rotatably supported on a bearing 2. The pulley I is rotated by an automotive engine via a belt. The pulley I is formed of a magnetic material in which one or more concentric arcuate or annular slits 3 are formed to define a plurality of concentric annular magnetic pole pieces. A hub 5 is fixed on the terminal end of a driven shaft 4. A holder plate 8 is fixed on the outer axial end surface of the armature plate 6 by a plurality of rivets 7. A radially inner end portion of the holder plate 8 and a radially outer end portion of the hub 5 are formed with cylindrically shaped axial flanges 8I and 5I both of which are concentrically disposed and a rubber member 9 is disposed in the clearance defined between the axial flanges 8I and 5I. Therefore, the armature plate 6 is connected to hub 5 through the holder plate 8 and rubber member 9. The transmission of sudden torque changes to the driven shaft is thus eased by the rubber member, and easing of the impact force is dependent on inducing bending stress and/or shear stress in the rubber member. But bending and/or shear stress is intermittently applied to the rubber member in accordance with intermittent operation of the clutch, and the rubber member will is liable to crack or to be destroyed by fatigue stress.

One solution to overcome the above mentioned disadvantages is disclosed in US-A-4,624,354. As shown in Figure 2, the electromagnetic clutch disclosed in that patent specification comprises an inner end portion of a holder plate 8′ and an outer end of a hub 5′ both being provided with concentrically polygonal shaped axial flanges 8I′ and 5I′, and a rubber member 9′ disposed between the axial flanges 8I′ and 5I′. Therefore, easing of the impact force is dependent on inducing of not only bending stress and/or shear stress in the rubber member but also restraint force for restraining those stresses. The durability of the rubber member is thus improved.

However, the rubber member used in both these known electromagnetic clutches are fixed to the axial flanges 8I and 5I by adhesive materials, and the adhesive strength of the adhesive materials deteriorates with the passage of time. As a result of such failure, the rubber member becomes detached from the surfaces of the axial flanges 8I, 5I. Also, the adhered parts of the rubber member become partly cracked and damaged.

An electromagnetic clutch according to the present invention, includes a first rotatable member with an axial end plate of magnetic material, and a second rotatable member secured to a hub. The hub includes a radially extending flange. An annular armature plate is concentrically disposed on and radially around the outer peripheral portion of the hub with a gap. The armature plate faces the axial end plate of the first rotatable member with an axial air gap. An electromagnetic means is disposed within the first rotatable member for attracting the armature plate to the axial end plate of the first rotatable member. A holder plate is fixed on an axial end surface of the armature plate and is formed with a first axially extending flange. The radial flange of the hub has a second axially extending flange. The first and second axial flanges are preferably formed with a polygonal shape and face one another with a radical gap. An elastic member is disposed in the radical gap for filling the radial gap. Therefore, any impact force is eased by the compressive deformation of the elastic member which is disposed between the axial flanges. Excessive twisting deformation of the elastic member is thus prevented.

In the accompanying drawings:-

Figure I is a cross-sectional view of a conventional electromagnetic clutch;

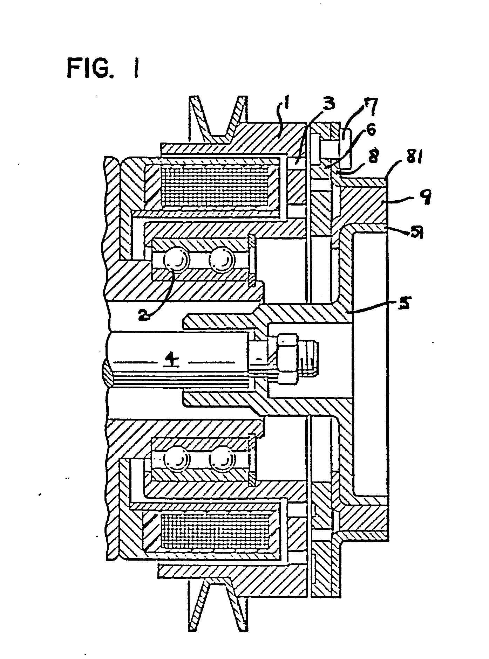

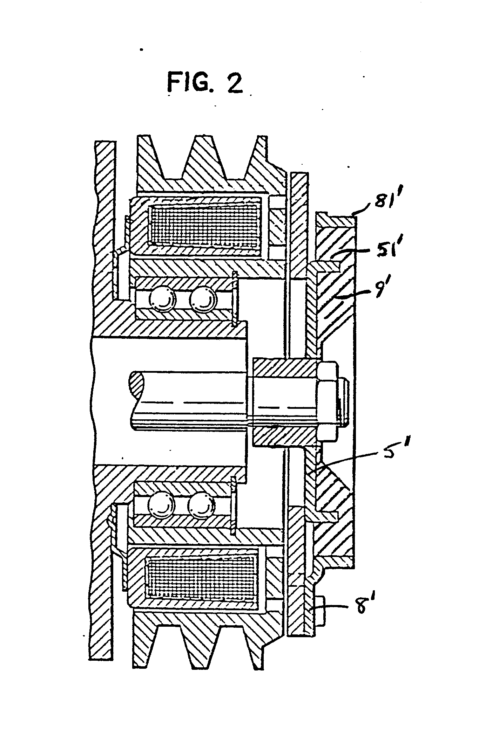

Figure 2 is a cross-sectional view of another conventional electromagnetic clutch;

Figure 3 is a cross-sectional view of an electromagnetic clutch in accordance with this invention; and,

Figure 4 is a front view of the clutch of Figure 3.

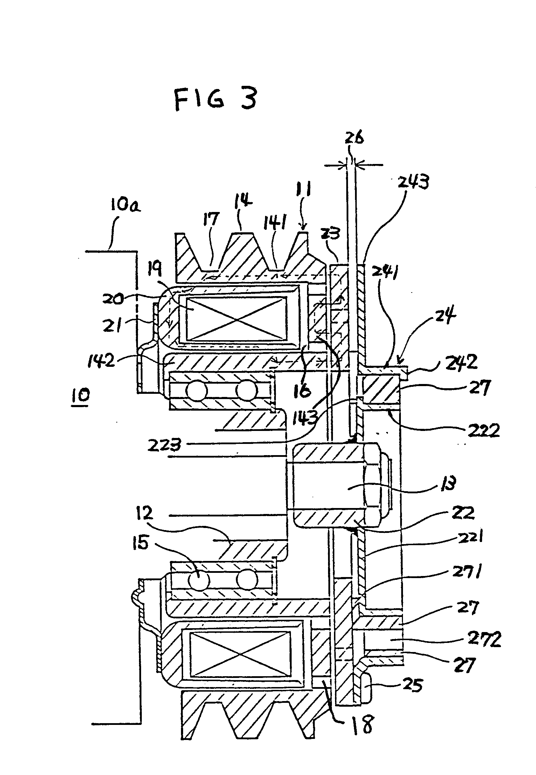

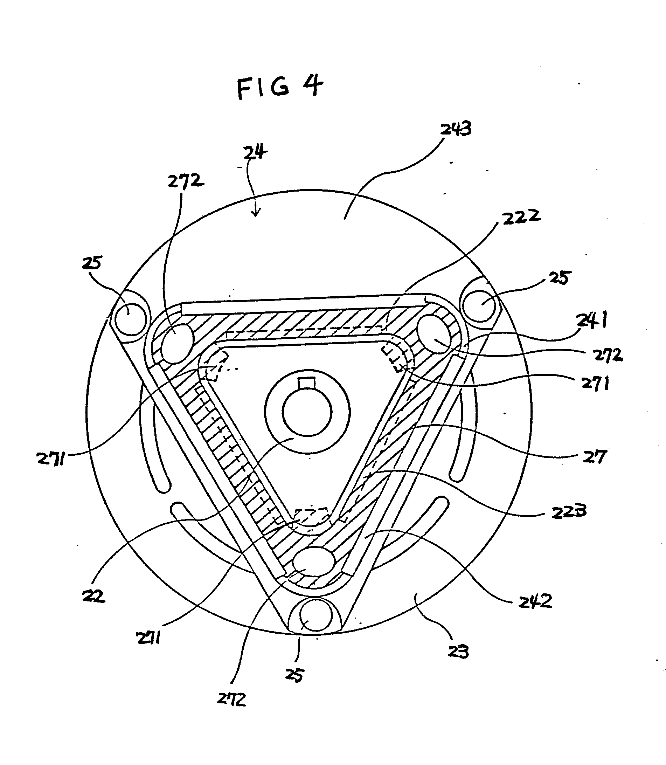

Figures 3 and 4 illustrate an electromagnetic clutch II shown assembled on a compressor I0 for an automotive air conditioning system. A compressor housing I0a is provided with a cantilevered tubular extension I2 surrounding an extension of a drive shaft I3 of the compressor. The drive shaft I3 is rotatably supported in the compressor housing I0a by bearings.

A pulley I4 is rotatably supported on the tubular extension I2 through a bearing I5 which is mounted on the outer peripheral surface of the tubular extension I2. The pulley I4 is made of magnetic material, such as steel, and comprises an outer annular cylindrical portion I4I, an inner annular cylindrical portion I42 and an axial end plate portion I43 connecting the outer and inner cylindrical portions I4I, I42 at an axial forward end. An annular cavity I6 is thus defined between these three portions I4I, I42 and I43. Annular V-shaped grooves I7 are provided on the outer peripheral surface of the outer cylindrical portion I4I of the pulley I4 for receiving a V-belt for coupling the compressor to the output shaft of an automobile engine (not shown).

The axial end plate portion I43 includes one or more concentric slits, so that a plurality of annular or arcuate magnetic pieces are defined, with the pole pieces surface being on the axial end surface of axial end plate portion I43.

An electromagnetic coil I9 is disposed in the annular cavity l6 of the pulley l4. The coil l9 is contained within an annular magnetic coil housing 20 having a U-shaped cross section. The coil housing 20 is fixed to a supporting plate 2l which is secured to the compressor housing l0a. The coil housing 20 is thus maintained within the cavity l6 but out of contact with the pulley l4 because of a small gap.

A hub 22 is secured to an extending terminal end of the shaft l3 by key and nut. The hub 22 has a radial flange portion 22l extending radially outwards. A ring armature plate 23 is disposed around the outer peripheral surface of the flange portion 22l concentric with the hub 22 with an annular radial gap therebetween. The armature plate 23 faces the axial end plate portion l43 of the pulley l4 with a predetermined axial air gap between them.

In this construction, a holder plate 24 is fixed on the outer axial end surface of the armature plate 23 by a plurality of rivets 25. The holder plate 24 is provided with a first axial flange 24l which extends axially outwards from the radially inner edge thereof and is formed in a triangular shape. An arc-shaped disc portion 243 extends radially outwards at one side of the triangle of the axial flange 24l, as shown in Figure 4, this disc portion 243 is used for balancing. The three straight line portions of the triangular shaped flange 24l are connected with one another through arcuate corners. The configuration of the first axial flange 24l thus consists of a plurality of similar linear and arcuate portions. An axial clearance 26 is provided between the axial end surface of the armature plate 23 and the axial inner end of the first axial flange 24l, as shown in Figure 3.

The hub 22 is formed with a second axial flange 222 which extends axially outwards from the radially outer edge of the radial flange portion 22l. The second axial flange 222 is formed with the same shape as the first axial flange portion 24l and they face one another with a radial gap.

An elastic member 27, e.g. a rubber member, is disposed in the radial gap which is defined between the inner surface of the first axial flange 24l and the outer surface of the second axial flange 222. The inner surface of the elastic member 27 is fixed on the outer surface of the second axial flange 222 of the hub 22 by vulcanization, and the elastic member 27 is fixedly disposed within the space so as to be urged radially inwards by the axial flange 24l. Alternatively, if first and second fixed flanges 242, 223 are formed respectively on the outer terminal end of the first axial flange 24l and the outer terminal end of the radial flange 22l of the hub 22 to restrict axial movement of the elastic member 27, the elastic member 27 will be able to be located in the radial gap between the axial flanges without any special bonding. Therefore, in the normal situation, the armature plate 23 is maintained in its static position facing the axial end plate portion l43, with a gap between them, by the recoil strength of the elastic member 27.

If the coil l9 is not energized, the armature plate 23 is thus separated from the pulley l4 by the recoil strength of the elastic member 27, maintaining the air gap. Therefore, even if the pulley l4 is driven by the engine of an automobile, the compressor is not operated. On the other hand, if the coil l9 is energized, the armature plate 23 is attracted to the pulley l4 by the magnetic flux which is caused by the energization of the coil l9 and indicated by the dotted line arrow in Figure 3, and the elastic member 27 is bent in the axial direction. The rotating movement of the automotive engine is then transmitted to the drive shaft l3 of the compressor through the pulley l4, armature plate 23, holder plate 24, elastic member 27 and hub 22.

At the moment the armature plate 23 contacts the axial end plate portion l43 of the pulley l4, the elastic member 27 receives an impact force caused by the torque of the holder plate 24. However, the impact force is eased by the comprehensive deformation and twist deformation in the direction of the rotating movement of the elastic member 27. That is, relative rotating motion between the axial flanges is limited, and excessive shear stress on the elastic member will be small, thereby minimising the chance of fatigue fracture of the elastic member.

Furthermore, the elastic member 27 is provided with extensions 27l which extend radially inwards at each corner thereof. These portions 27l of the elastic member 27 are fixedly disposed between the first radial flange portion 22l of the hub 22 and the outer end surface of the armature plate 23 by the securing rivets 25. Accordingly, the elastic member 27 cannot be displaced. Communicating holes 272 are formed through each corner of the elastic member 27 to interconnect the axial clearance 26 and ambient space to allow air flow and reduce heat fatigue of the elastic member 27.

## Claims

l. An electromagnetic clutch including a rotatable driving member (l4) having an axial end plate (l43) of magnetic material, a second rotatable member (22) connectable or connected to a driven member, an annular aramture plate (23) of magnetic material joined to the second rotatable member so as to be capable of limited axial movement, the annular armature plate facing the axial end plate of the driving member with an axial air gap therebetween, and an electromagnetic means associated with the axial end plate (l43) for attracting the armature plate, whereby rotation of the driving member can be transmitted to the second rotatable member through the armature plate by the operation of the electromagnetic means, characterised in that a holder (24) is fixed to the outer axial end surface of the armature plate with an axial clearance therebetween, and formed with a first axially outwardly extending flange (24l) at a radially inner edge thereof, the first axially outwardly extending flange having a configuration including at least one linear portion; the second rotatable member has a radially outwardly extending flange (22l) with a second axially outwardly extending flange (222) at a radially outer edge thereof, the first and second axially outwardly extending flanges (242,22l) having similar configurations and facing one another with a radial gap therebetween; and an elastic member (27) is disposed in the radial gap whereby the relative rotation between the first and second axially outwardly extending flanges is limited by compression of the elastic member.

2. An electromagnetic clutch according to any one of the preceding claims, wherein the elastic member (27) is formed with at least one hole (272) to interconnect the axial clearance and ambient space for cooling air flow.

3. An electromagnetic clutch according to claim I or claim 2, wherein the configuration of the first axially outwardly extending flange (242) includes at least two linear portions interconnected by an arcuate portion.

4. An electromagnetic clutch according to claim 3, wherein the first and second axially outwardly extending flanges (242,22l) are each formed with a generally triangular configuration, and each corner of each triangle is arcuate.

5. An electromagnetic clutch according to any one of the preceding claims, wherein the holder (24) comprises a plurality of similarly shaped parts.

6. An electromagnetic clutch according to any one of the preceding claims, wherein the linear portion is extended radially outwardly to provide an unbalance weight.

7. An electromagnetic clutch according to any one of the preceding claims, wherein the elastic member (27) has, at corners thereof, a plurality of extensions (272) which are fixed between the radially extending flange (22l) and the armature plate (23).

0239401

FIG. 1

0239401

FIG. 2

0239401

FIG 3

0239401

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X P | US-A-4 624 354  (KOITABASHI)<br><br>* Columns 3-6; figures 3-6 *<br><br>--- | 1-5 | F 16 D  27/10<br>F 16 D  27/14 |
| D,Y | US-A-3 774 739  (HIGUCHI)<br>* Whole document *<br><br>--- | 1-5,7 | |
| Y | DE-A-2 733 880  (D.B.A. BENDIX)<br>* Whole document *<br><br>--- | 1-3,5 | |
| Y | US-A-1 825 981  (REED)<br>* Whole document *<br><br>--- | 1,3-5 | |
| Y | PATENT ABSTRACTS OF JAPAN, vol. 4, no. 171 (M-44)[653], 26th November 1980; & JP-A-55 123 028 (NIPPON DENSO K.K.) 22-09-1980<br><br>----- | 7 | TECHNICAL FIELDS SEARCHED (Int. Cl.4)<br><br>F 16 D  27/00 |

The present search report has been drawn up for all claims

| Place of search | Date of completion of the search | Examiner |
|---|---|---|
| THE HAGUE | 01-06-1987 | BALDWIN D.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82